# EUROPEAN PATENT APPLICATION

(11) **EP 2 983 282 A2**
(43) Date of publication of application: **10.02.2016**
(21) Application number: 15178296.8
(22) Date of filing: 24.07.2015
(51) Int. Cl.: H02M 3/158

(54) **THREE PORT DC-DC CONVERTER**

(30) Priority: 01.08.2014 US 201414449274
(71) Applicant: General Electric Company, Schenectady, NY 12345 (US)
(72) Inventor: SHE, Xu, Niskayuna, NY 12309 (US); KING, Robert Dean, Erie, PA 16531 (US); HUH, Kum-Kang, Niskayuna, NY 12309 (US)
(74) Representative: Illingworth-Law, William Illingworth

(57) **Abstract**

A three port DC-DC converter 10 connectable to multiple energy sources and loads to allocate power therebetween is disclosed. The three port DC-DC converter includes an arrangement of switching devices consisting of a first switching device 58, a second switching device 60, and a third switching device 62. The three port DC-DC converter also includes a pair of input channels 38,46 that provide current to the arrangement of switching devices, with the pair of input channels connected to and receiving or sending power from or to a plurality of energy sources or loads. The three port DC-DC converter further includes an output channel 54 that outputs a controlled power from or to the three port DC-DC converter. The first switching device 58, the second switching device 60, and the third switching device 62 are selectively controllable to provide a controlled power to the output channel from the plurality of energy sources or loads connected to the input channels.

## Description

### BACKGROUND OF THE INVENTION

Embodiments of the invention relate generally to power converters and, more particularly, to a DC-DC power converter connectable to multiple energy sources and loads to allocate power therebetween.

The integration of multiple distinct energy sources is common in many electrical power system applications for purposes of combining the advantages of the energy sources and utilizing each energy source in an efficient way. For example, dual/multiple energy storage technologies have been utilized recently in the propulsion system of electric vehicles, hybrid electrical vehicles, plug-in hybrid electric vehicles, and hybrid locomotives, as well as in start-and-stop fuel efficiency systems. The propulsion systems and/or start-and-stop fuel efficiency systems in these vehicles/locomotives use large batteries, ultracapacitors, flywheels, or a combination of these elements so as to provide sufficient energy to power an electric motor or motors (and/or achieve fuel efficiency).

While generally effective, a challenge related to such systems is that the nominal voltage of the energy storage units (i.e., batteries and/or ultracapacitors) therein set the overall system voltage.. Such a configuration limits the overall reliability and efficiency of the electric propulsion system, as the voltage demands of the electric motor are often far greater than the energy storage unit voltage.

To combat this issue, DC-DC voltage converters (e.g., bi-directional boost converters) are often employed to decouple the energy storage unit voltage(s) from a DC link voltage (with the DC link being coupled to the electric motor), with one or multiple converters being employed to provide this decoupling. The bi-directional boost converters act to increase, or "boost", the voltages provided from the energy storage units to the DC link to meet the power demands of the electric motor. In fact, the ratio of the DC link voltage to the energy storage unit voltage(s) is typically greater than 2:1. The bi-directional boost converters enable such an increase in voltage supplied to the DC link without the need for an increase in the size of the energy storage units (e.g., number of energy storage units connected in series).

While existing bi-directional boost converters successfully allow for an increased supply of voltage to the DC link without a corresponding increase in size of the energy storage units, the typical connection of multiple converters in a parallel or series fashion (to integrate the multiple energy sources with full controllability) results in a high number of switches being employed in the power conversion process. For example, a pair of two-port DC-DC converters connected in a parallel or series fashion to provide voltage boosting and/or bucking results in a total of four switches being employed for performing the voltage conversion. This high number of switches in the arrangement of DC-DC converters increases the volume, weight, and the cost of the system. Additionally, this arrangement of converters provides limited power or energy handing capability for each conversion path, un-optimized performance (including cost, power density, energy density, etc.), and/or limited controllability of some of the sources/loads.

The typical connection of multiple converters in a parallel or series fashion (to integrate the multiple energy sources with full controllability) is also employed in arrangements where a single energy storage device provides power to multiple loads (e.g., electric motors), with this again resulting high number of switches being employed in the power conversion process.

Therefore, it is desirable to provide a DC-DC converter connectable to multiple energy sources that includes a minimal number of switches therein necessary to allocate power and integrate the multiple energy resources/loads with full controllability.

### BRIEF DESCRIPTION OF THE INVENTION

Embodiments of the invention are directed to a DC-DC power converter connectable to multiple energy sources and loads to allocate power therebetween.

In accordance with one aspect of the invention, a three port DC-DC converter includes an arrangement of switching devices consisting of a first switching device, a second switching device, and a third switching device. The three port DC-DC converter also includes a pair of input channels that provide current to the arrangement of switching devices, with the pair of input channels connected to and receiving or sending power from or to a plurality of energy sources or loads. The three port DC-DC converter further includes an output channel that outputs a controlled power from or to the three port DC-DC converter. The first switching device, the second switching device, and the third switching device are selectively controllable to provide a controlled power to the output channel from the plurality of energy sources or loads connected to the input channels.

In accordance with another aspect of the invention, a three port DC-DC converter includes a first voltage conversion circuit having an inductor and a pair of switching devices coupled to the inductor. The three port DC-DC converter also includes a second voltage conversion circuit having an inductor and a pair of switching devices coupled to the inductor. The three port DC-DC converter further includes a first input channel and a second input channel connected to the first and second voltage conversion circuits, respectively, with each of the input channels providing power to its respective voltage conversion circuit from one or more energy sources or loads connected thereto. The pair of switching devices in the first voltage conversion circuit and the pair of switching devices in the second switching device are formed from an arrangement of a first switching device, a second switching device and a third switching device, with the first and second voltage conversion circuits having a shared current path between an output channel of the three port DC-DC converter.

In accordance with yet another aspect of the invention, a multi-energy source system includes a direct current (DC) link, a load coupled to the DC link and configured to receive energy from the DC link, a three port DC/DC converter comprising an output channel coupled to the DC link and comprising first and second input channels, a first energy source coupled to the first input channel of the three port DC/DC converter, and a second energy source coupled to the second input channel of the three port DC/DC converter. The three port DC/DC converter further includes an arrangement of switching devices consisting of a first switching device, a second switching device, and a third switching device, and a controller in operable communication with the arrangement of switching devices to selectively operate each of the first switching device, the second switching device, and the third switching device in one of an On state and an Off state. The controller is programmed to selectively operate each of the first switching device, the second switching device, and the third switching device in one of the On state and the Off state so as to control current flow between the first and second energy sources and the output channel.

Various other features and advantages will be made apparent from the following detailed description and the drawings.

### BRIEF DESCRIPTION OF THE DRAWINGS

The drawings illustrate embodiments presently contemplated for carrying out the invention.

In the drawings:
FIG. 1 is a schematic block diagram of a buck-boost type three-port DC-DC converter with attached sources/loads, according to an embodiment of the invention.
FIG. 2 is a schematic block diagram of a boost type three-port DC-DC converter with attached sources/loads, according to an embodiment of the invention.
FIG. 3 is a schematic block diagram of a buck type three-port DC-DC converter with attached sources/loads, according to an embodiment of the invention.
FIG. 4 is a graph illustrating a modulation strategy for providing a sequence of gate signals to the switching devices in the three-port DC-DC converter of any of FIGS. 1-3, according to an embodiment of the invention.
FIGS. 5A-5C are schematic block diagrams of various operating modes of the buck-boost type three-port DC-DC converter of FIG. 1 when operated according to the modulation strategy of FIG. 4.
FIG. 6 is a schematic block diagram of a buck-boost type three-port DC-DC converter with attached sources/loads, according to another embodiment of the invention.
FIG. 7 is a schematic block diagram of a buck-boost type three-port DC-DC converter with attached sources/loads, according to another embodiment of the invention.
FIG. 8 is a schematic block diagram of a buck-boost type three-port DC-DC converter with attached sources/loads, according to another embodiment of the invention.
FIG. 9 is a schematic block diagram of a buck-boost type three-port DC-DC converter with attached sources/loads, according to another embodiment of the invention.

### DETAILED DESCRIPTION

Embodiments of the invention provide a three port DC-DC converter that includes an arrangement of three switching devices therein that are selectively controllable to provide a controlled output power from the converter. A plurality of energy sources or loads are provided on one side of the three port DC-DC converter and connected thereto via input channels of the converter, with the arrangement of three switching devices being controlled to selectively provide power from one or more of the energy sources to an output of the converter, or to provide power to multiple loads from the input of the converter.

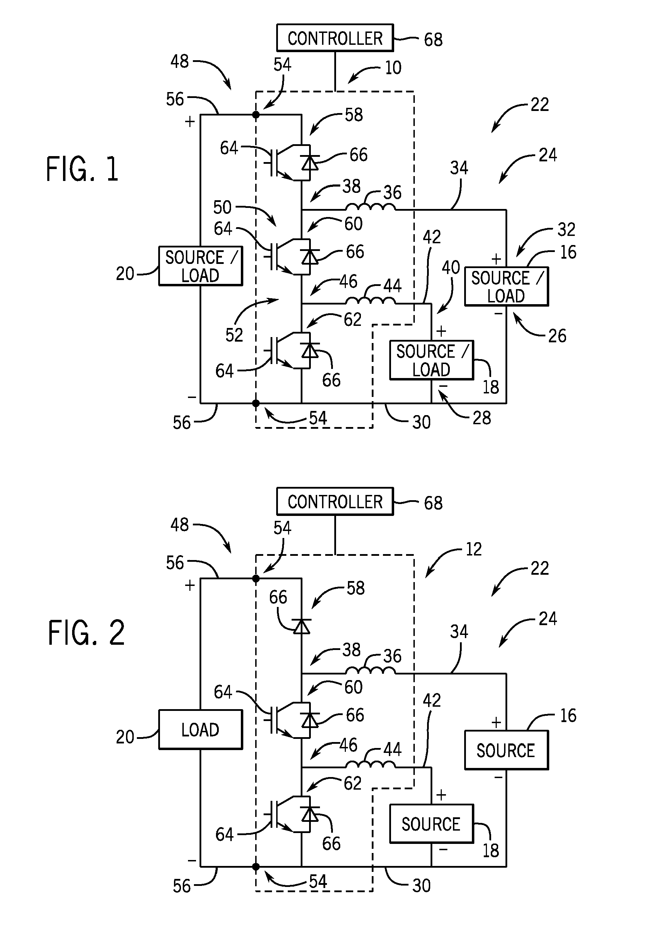

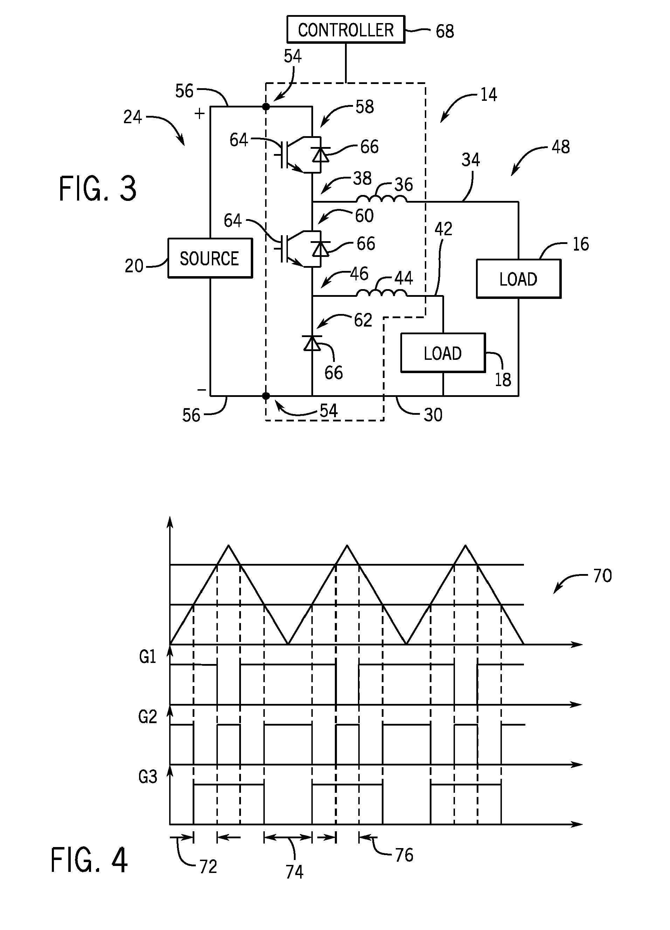

FIGS. 1-3 illustrate various embodiments of a three port DC-DC converter that each integrates two DC-DC converters (i.e., voltage conversion circuits) with a shared current path between them. FIG. 1 shows a buck-boost type three-port DC-DC converter 10 which can achieve bidirectional power flow. FIG. 2 shows a boost type three-port DC-DC converter 12 that can deliver power from a low voltage side to a high voltage side. FIG. 3 shows a buck type three port DC-DC converter 14 that can deliver power from a high voltage side to a low voltage side.

The three port DC-DC converter 10, 12, 14 in each of the embodiments of FIGS. 1-3 is connected to a plurality of energy providing or energy consuming devices (i.e., energy sources or loads) of differing voltages - such that a boosting or bucking of voltages is performed by the three port DC-DC converter 10, 12, 14. At least two sources/loads are provided on one side of the three port DC-DC converter 10, 12, 14-with FIGS. 1-3 each showing a first source/load 16 and a second source/load 18 provided on one side of the converter. While only a first and second load/source 16, 18 are shown connected to the DC-DC converter 10, 12, 14, it is recognized that additional sources/loads may be connected thereto - with such sources/loads being connected in parallel or series. A source/load 20 is also provided on the side of the converter opposite the first and second sources/loads 16, 18. It is pointed out that DC capacitors may be put at the terminals for smoothing the voltage, and this is not drawn in the FIGS. 1-3.

As shown specifically in FIG. 1, accordingly to an exemplary embodiment, a buck-boost type three-port DC-DC converter 10 is provided as part of a multi-energy storage device system 22 - with the sources/ loads 16, 18, 20 being in the form of a first energy storage device 16 (e.g., an energy battery), a second energy storage device 18 (e.g., a high specific-power energy storage device), and a load 20 (e.g., DC-AC inverter and AC motor). The first energy storage device 16 may be in the form of a high specific energy battery or high energy density battery, such as a Li-ion, sodium-metal halide, sodium nickel chloride, sodium-sulfur, or zinc-air battery, for example, that can achieve an energy density on the order of 100 W-hr/kg or greater. The second energy storage device 18 may be a high-specific power energy storage device, such as an ultracapacitor bank comprised of multiple cells having a cell capacitance that is greater than 500 Farads per cell, for example.

In FIG. 1, the first energy storage device 16 and second energy storage device 18 are coupled together on a low-voltage side 24 of buck-boost type three-port DC-DC converter 10, wherein a negative terminal 26 of first energy storage device 16 and a negative terminal 28 of second energy storage device 18 are coupled to a bus 30, while a positive terminal 32 of first energy storage device 16 is coupled to a bus 34, which is a positive bus that connects through an inductor 36 to input channel 38 of buck-boost type three-port DC-DC converter 10 on the low-voltage side 24 of the converter. A positive terminal 40 of second energy storage device 18 is coupled to a bus 42, which is coupled through an inductor 44 on the low-voltage side 24 at input channel 46 of buck-boost type three-port DC-DC converter 10.

During typical operation, buck-boost type three-port DC-DC converter 10 acts to boost the voltage provided by low-voltage side 24 of system 22 to high-voltage side 48 of system 22, as well as to regulate the voltage and provide over-current protection to first energy storage device 16 and second energy storage device 18. Different power allocation strategies can be applied to the system. For example, both energy storage device 18 and energy storage device 16 can provide power simultaneously to the load 20. It could also be operated in a way that one source provide the power for most of the time while the other is used as the backup.

With regard to the buck-boost type three-port DC-DC converter 10, the converter is constructed to include a first voltage conversion circuit 50 and a second voltage conversion circuit 52 therein that have a shared current path therebetween. Each of the first conversion circuit 50 and the second conversion circuit 52 includes a respective input channel 38, 46 having an inductor 36, 44 thereon, as previously described, through which the conversion circuits 50, 52 are connected to the first and second energy storage devices 16, 18, respectively. Upon performing of a desired a boosting of voltages, the first and second conversion circuits 50, 52 provide a voltage output to an output channel 54 of the three port DC-DC converter 10, with the output channel 54 providing the boosted voltage to a DC link 56 to which the load 20 is connected.

The buck-boost type three-port DC-DC converter 10 further includes an arrangment of three switching devices - i.e., a first switching device 58, a second switching device 60, and a third switching device 62 - for selectively boosting and bucking voltages in the system between first and second energy storage devices 16, 18 and load 20. As shown in FIG. 1, according to an embodiment of the invention, each switching device 58, 60, 62 is formed as a half phase module that includes a switch 64 coupled to a diode 66 (i.e., a switch/diode pair). Switches 64 are shown, for illustrative purposes, as insulated gate bipolar transistors (IGBTs). However, embodiments of the invention are not limited to IGBTs. Any appropriate electronic switch can be used, such as, for example, metal oxide semiconductor field effect transistors (MOSFETs), silicon carbide (SiC) MOSFETs, Gallium nitride (GaN) devices, bipolar junction transistors (BJTs), and metal oxide semiconductor controlled thyristors (MCTs).

The switching devices 58, 60, 62 are arranged such that the first switching device 58 operably connects to a positive terminal of the output channel 54 and the third switching device 62 operably connects to a negative terminal of the output channel 54, with the second switching device 60 having one terminal operably connected to the first switching device 58 and a second terminal operably connected to the third switching device 62. The switching devices 58, 60, 62 are further arranged such that the first switching device 58 and the second switching device 60 are operably connected to a terminal of the inductor 36, and the second switching device 60 and the third switching device 62 are operably connected to a terminal of the inductor 44.

Based on the arrangement of the first switching device 58, second switching device 60, and third switching device 62 - the switching devices 58, 60, 62 collectively serve as the switching devices for the first voltage conversion circuit 50 and the second voltage conversion circuit 52. Based on the arrangement of the switching devices 58, 60, 62 forming each of the first voltage conversion circuit 50 and the second voltage conversion circuit 52 (in part), a shared current path is utilized between the first and second voltage conversion circuits 50, 52 between and the output channel 54 of the three port DC-DC converter 10.

Also included in the buck-boost type three-port DC-DC converter 10 is a controller 68 that is in operable communication with the arrangement of switching devices 58, 60, 62 to selectively operate each of the first switching device 58, the second switching device 60, and the third switching device 62 in one of an On state (i.e., conducting/conducted state) and an Off state (i.e., non-conducting/non-conducted state). The controller 68 selectively applies gate signals to the switching devices 58, 60, 62 (i.e., to switches 64) in order to switch them to the On state and control a current flow through the switching devices 58, 60, 62, such that power can be selectively drawn from the first energy storage device 16 and/or second energy storage device 18.

In order to illustrate the operating principle of the buck-boost type three-port DC-DC converter 10, and of the conversion circuits 50, 52 and switching devices 58, 60, 62 therein - via controller 68 - reference is made to FIG. 4, which shows one of the possible sequences of gate signals G1, G2, G3 provided to the respective switching devices 58, 60, 62 of the buck-boost type converter 10 by controller 68. The illustrated modulation strategy 70 is applicable to both buck and boost operation modes of the three-port DC-DC converter 10 and provides smoothing when switching between the modes. With the device turned on, the current could be either direction depending on the power flow. With respect to the modulation strategy 70, it is recognized that the voltage of the first energy storage device 16 should be higher than that of the second energy storage device 18 due to the unidirectional voltage blocking capabilities of the device.

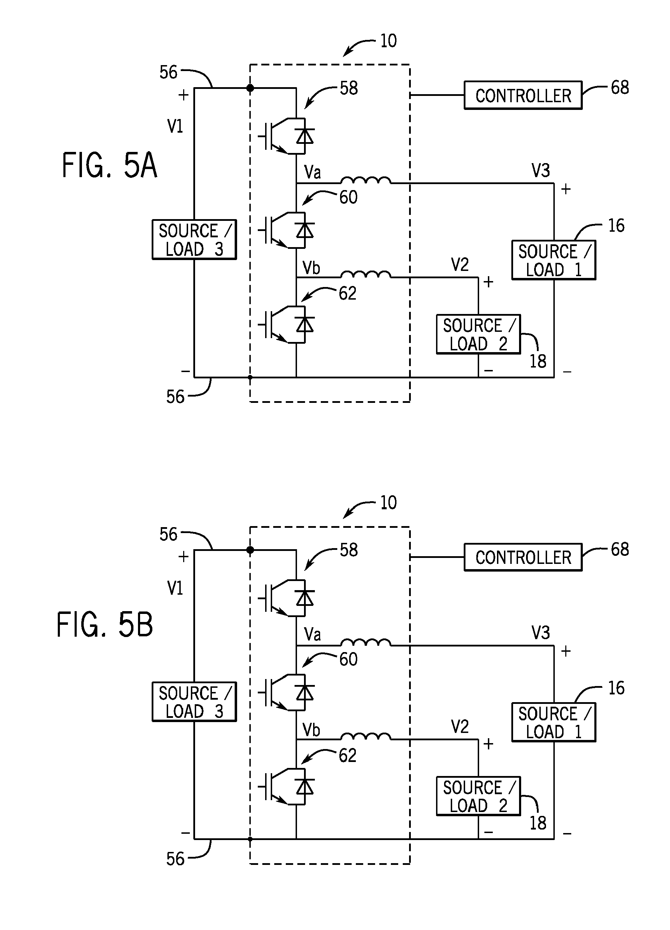

Referring now to FIGS. 5A-5C, and with continued reference to FIG. 3, it can be seen that there are essentially three possible operating modes of the buck-boost type DC-DC converter 10 that can be achieved via the modulation strategy 70 illustrated in FIG. 4. FIG. 5A shows an operating mode when power flows among the DC bus 56 and the first energy storage device 16 when the first switching device 58 and the third switching device 62 conduct current. This sequence of gate signals provided to the switching devices 58, 60, 62 by controller 68 - with the first switching device 58 and the third switching device 62 being in the On state and the second switching device 60 being in the Off state - is illustrated in FIG. 4 during a period 72. In this condition of the switching devices 58, 60, 62 of DC-DC converter 10, as implemented by the controller 68, the voltage Va is V1 and the voltage Vb is 0, as shown in FIG. 5A.

FIG. 5B shows the operating mode when the power flows among DC bus 56 and both the first and second energy storage devices 16, 18 when both first switching device 58 and second switching device 60 conduct current. This sequence of gate signals provided to the switching devices 58, 60, 62 by controller 68 - with the first switching device 58 and the second switching device 60 being in the On state and the third switching device 62 being in the Off state - is illustrated in FIG. 4 during a period 74. In this condition of the switching devices 58, 60, 62 of DC-DC converter 10, as implemented by the controller 68, both voltage Va and Vb equal to V1, as shown in FIG. 5B.

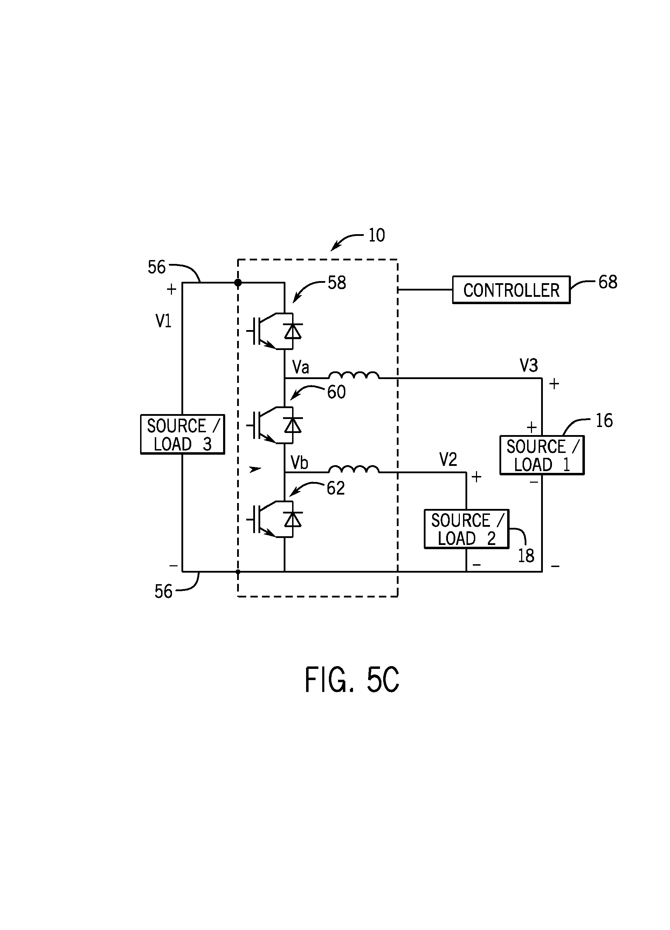

FIG. 5C shows the operating mode when both of the first and second energy storage devices 16, 18 are disconnected from the DC bus 56 when the second switching device 60 and the third switching device 62 conduct current. This sequence of gate signals provided to the switching devices 58, 60, 62 by controller 68 - with the second switching device 60 and the third switching device 62 being in the On state and the first switching device 58 being in the Off state - is illustrated in FIG. 4 during a period 76. In this condition of the switching devices 58, 60, 62 of DC-DC converter 10, as implemented by the controller 68, both voltage Va and Vb equal to 0, as shown in FIG. 5C.

In order to optimize the performance of the buck-boost type three-port DC-DC converter 10, other switching schemes could also be applied. For example, if the DC-DC converter 10 is in boost mode and only the second energy storage device 18 is operating, the gate signal of the first switching device 58 and the second switching device 60 can be turned-off with the third switching device 62 at a desired duty cycle. Also, if the buck-boost type three-port DC-DC converter 10 is in boost mode and only the first energy storage device 16 is operating, the gate signal of the first switching device 58 can be turned-off with the second switching device 60 and the third switching device 62 at the same desired duty cycle. In addition to these additional switching schemes described for boost operating mode of the DC-DC converter, it is recognized that similar switching schemes can be applied to the buck operating mode. By doing these optimizations, the switching loss can be reduced.

Beneficially, the modulation strategy 70 implemented by the controller 68 allows for the voltage/power regulations of different ports (i.e., the input ports/channels 38, 46 and the output port/channel 54) to be independent from one another. The allocation of power and integration of the multiple energy sources/loads 16, 18, 20 can thus be provided with full controllability.

While the structure of a three-port DC-DC converter and the operation thereof via controller 68 have been described above specifically with respect to the buck-boost type three-port DC-DC converter 10 of FIG. 1, it is recognized that the boost type three-port DC-DC converter 12 of FIG. 2 and the buck type three port DC-DC converter 14 of FIG. 3 are essentially the same in construction and in operation, with only minor variances. With regard to the boost type three-port DC-DC converter 12 of FIG. 2, it can be seen that the first switching device 58 is in the form of a unidirectional diode 66 (rather than a half phase module, as in the boost-buck type three-port DC-DC converter of FIG. 1). With regard to the buck type three-port DC-DC converter 14 of FIG. 3, it can be seen that the third switching device 62 is in the form of a unidirectional diode 66 (rather than a half phase module, as in the boost-buck type three-port DC-DC converter of FIG. 1). Operationally, the switching devices 58, 60, 62 in each of the boost type three-port DC-DC converter 12 of FIG. 2 and the buck type three port DC-DC converter 14 of FIG. 3 would be controlled in a way similar to the one described in controller 68 with certain modifications..

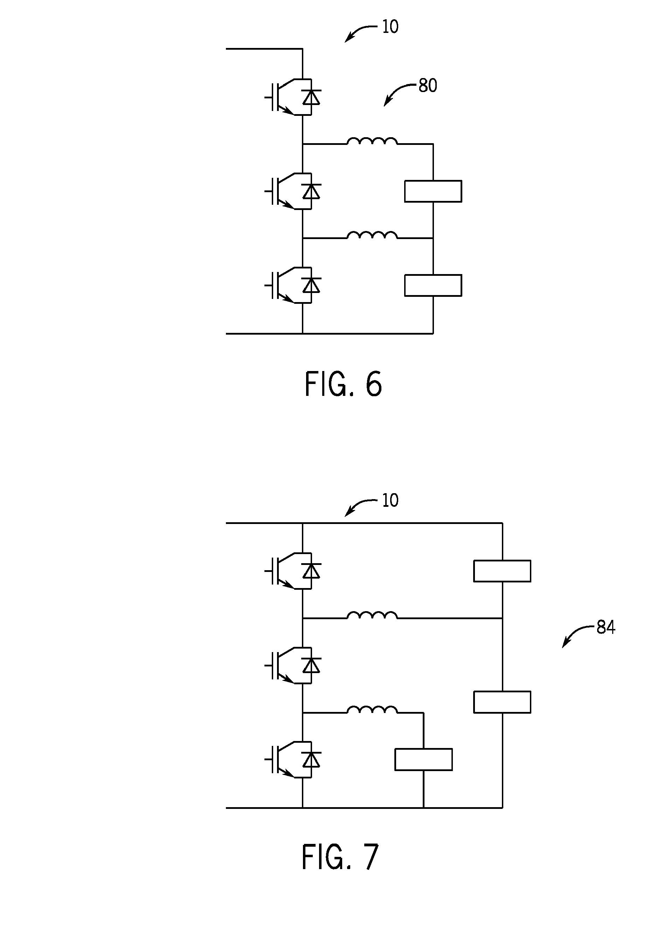

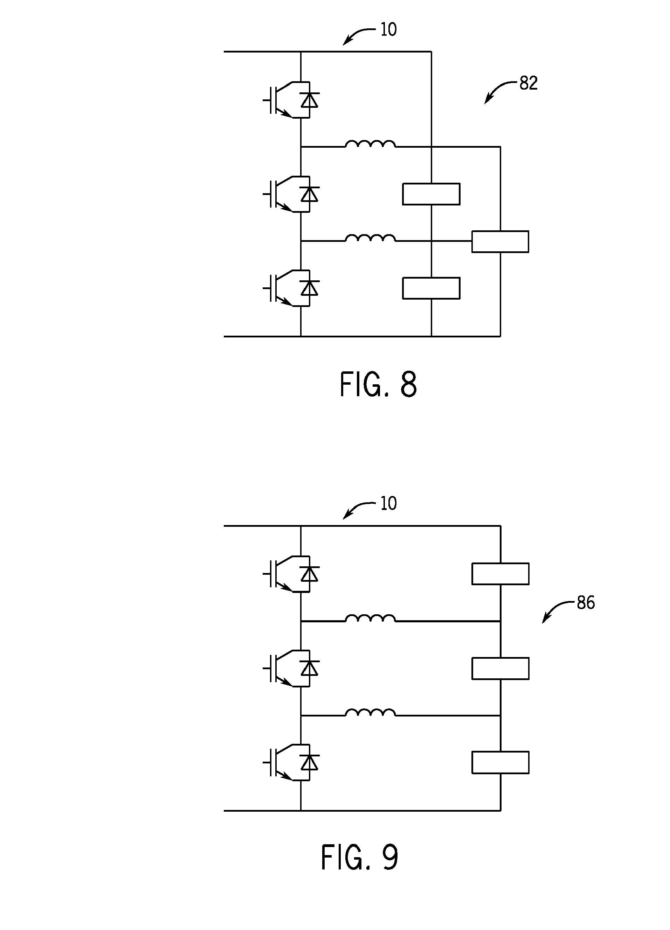

It is also recognized that the embodiments of the three port DC-DC converters 10, 12, 14 shown and described in FIGS. 1-3 - and the control thereof described with respect to FIGS. 4 and 5A-5C - are useable with different arrangements of sources and loads, and that there are other possible configurations of the proposed DC-DC topologies when integrating different sources/loads. With respect to a bidirectional buck-boost type three port DC-DC converter 10, as an example, FIG. 6 illustrates a configuration 80 where the sources/loads are connected in series on one side of the converter, while FIGS. 7-9 illustrate configurations 82, 84, 86 where three sources/loads are provided on one side of the converter. In addition, the energy sources/loads can also be positioned at high voltage DC link directly, as may be done in hybrid electrical vehicles for example. It is further recognized that the configurations 80, 82, 84, 86 of FIG. 6 and FIGS. 7-9 can also be applied to buck-type three port DC-DC converters and boost-type three port DC-DC converters.

Beneficially, embodiments of the invention thus provide a three port DC-DC converter connectable to multiple energy sources and loads to allocate power therebetween. The DC-DC converter includes an arrangement of three switching devices therein and a shared current path, such that the total number of switching devices in the converter is less than that typically found in a parallel or series arrangement of two port DC-DC converters. Accordingly, compared with existing arrangements of two port DC-DC converters arts, the number of the switching devices in the three port DC-DC converter is reduced by 25%. Therefore, the size and weight of the converter can be reduced. Also, due to the shared current path, a standard device module design can be implemented with different sizing schemes of the hybrid energy sources/loads with the same total power rating. Therefore, it makes a source/load system design much more flexible and reduces the new product manufacture cost. The conduction loss of the system can also be reduced in certain operating range due to higher current rating devices used in the topology.

According to one embodiment of the invention, a three port DC-DC converter includes an arrangement of switching devices consisting of a first switching device, a second switching device, and a third switching device. The three port DC-DC converter also includes a pair of input channels that provide current to the arrangement of switching devices, with the pair of input channels connected to and receiving or sending power from or to a plurality of energy sources or loads. The three port DC-DC converter further includes an output channel that outputs a controlled power from or to the three port DC-DC converter. The first switching device, the second switching device, and the third switching device are selectively controllable to provide a controlled power to the output channel from the plurality of energy sources or loads connected to the input channels.

According to another embodiment of the invention, a three port DC-DC converter includes a first voltage conversion circuit having an inductor and a pair of switching devices coupled to the inductor. The three port DC-DC converter also includes a second voltage conversion circuit having an inductor and a pair of switching devices coupled to the inductor. The three port DC-DC converter further includes a first input channel and a second input channel connected to the first and second voltage conversion circuits, respectively, with each of the input channels providing power to its respective voltage conversion circuit from one or more energy sources or loads connected thereto. The pair of switching devices in the first voltage conversion circuit and the pair of switching devices in the second switching device are formed from an arrangement of a first switching device, a second switching device and a third switching device, with the first and second voltage conversion circuits having a shared current path between to an output channel of the three port DC-DC converter.

According to yet another embodiment of the invention, a multi-energy source system includes a direct current (DC) link, a load coupled to the DC link and configured to receive energy from the DC link, a three port DC/DC converter comprising an output channel coupled to the DC link and comprising first and second input channels, a first energy source coupled to the first input channel of the three port DC/DC converter, and a second energy source coupled to the second input channel of the three port DC/DC converter. The three port DC/DC converter further includes an arrangement of switching devices consisting of a first switching device, a second switching device, and a third switching device, and a controller in operable communication with the arrangement of switching devices to selectively operate each of the first switching device, the second switching device, and the third switching device in one of an On state and an Off state. The controller is programmed to selectively operate each of the first switching device, the second switching device, and the third switching device in one of the On state and the Off state so as to control current flow between the first and second energy sources and the output channel.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A three port DC-DC converter comprising:
   an arrangement of switching devices consisting of a first switching device, a second switching device, and a third switching device;
   a pair of input channels that provide current to the arrangement of switching devices, with the pair of input channels connected to and receiving or sending power from or to a plurality of energy sources or loads; and
   an output channel that outputs a controlled power from or to the three port DC-DC converter;
   wherein the first switching device, the second switching device, and the third switching device are selectively controllable to provide a controlled power to the output channel from the plurality of energy sources or loads connected to the input channels.
2. The three port DC-DC converter of clause 1, wherein each of the pair of input channels includes an inductor thereon.
3. The three port DC-DC converter of clause 1 or clause 2, further comprising a controller in operable communication with the arrangement of switching devices to selectively operate each of the first switching device, the second switching device, and the third switching device in one of a conducted state and a non-conducted state.
4. The three port DC-DC converter of any preceding clause, wherein the plurality of energy sources or loads comprises a first energy source and a second energy source, with the first energy source connected to one of the pair of input channels and the second energy source connected to the other of the pair of input channels.
5. The three port DC-DC converter of any preceding clause, wherein a voltage of the first energy source is lower than a voltage of the second energy source.
6. The three port DC-DC converter of any preceding clause, wherein the controller is programmed to operate the first switching device and the third switching device in the conducted state to cause power to flow between the first energy source and the output channel.
7. The three port DC-DC converter of any preceding clause, wherein the controller is programmed to operate the first switching device and the second switching device in the conducted state to cause power to flow between both of the first and second energy sources and the output channel.
8. The three port DC-DC converter of any preceding clause, wherein the controller is programmed to operate the second switching device and the third switching device in the conducted state to disconnect both of the first and second energy sources from the output channel.
9. The three port DC-DC converter of any preceding clause, wherein the selective operation of each of the first switching device, the second switching device, and the third switching device by the controller provides a shared current path between the plurality of energy sources or loads and the output channel.
10. The three port DC-DC converter of any preceding clause, wherein each of the first switching device, the second switching device, and the third switching device comprises a half phase module including a switch and a diode that form a switch/diode pair, such that the three port DC-DC converter is a bidirectional buck-boost converter.
11. The three port DC-DC converter of any preceding clause, wherein two switching devices of the arrangement of switching devices comprise a half phase module including a switch and a diode that form a switch/diode pair, and the other of the arrangement of switching devices comprises a diode to control current flow in one direction, such that the three port DC-DC converter is one of a boost converter or a buck converter.
12. The three port DC-DC converter of any preceding clause, wherein the plurality of energy sources or loads comprises either:
   energy sources provided on either a low voltage side or a high voltage side of the three port DC-DC converter, such that the three port DC-DC converter delivers power from the energy sources to the loads in a generative mode; or
   loads provided on either a low voltage side or a high voltage side of the three port DC-DC converter, such that the three port DC-DC converter delivers power provided by the loads to the energy sources when operating in a regenerative mode.
13. A three port DC-DC converter comprising:
   a first voltage conversion circuit including:
      an inductor;
      a pair of switching devices coupled to the inductor;
   a second voltage conversion circuit including:
      an inductor;
      a pair of switching devices coupled to the inductor; and
      a first input channel and a second input channel connected to the first and second voltage conversion circuits, respectively, with each of the input channels providing power to its respective voltage conversion circuit from one or more energy sources or loads connected thereto;
      herein the pair of switching devices in the first voltage conversion circuit and the pair of switching devices in the second switching device are formed from an arrangement of a first switching device, a second switching device and a third switching device, with the first and second voltage conversion circuits having a shared current path between to an output channel of the three port DC-DC converter.
14. The three port DC-DC converter of any preceding clause, further comprising a controller in operable communication with the first and second voltage conversion circuits to selectively operate each of the first switching device, the second switching device, and the third switching device in one of an On state and an Off state.
15. The three port DC-DC converter of any preceding clause, wherein the controller is programmed to selectively operate each of the first switching device, the second switching device, and the third switching device in one of the On state and the Off state so as to:
   cause power to flow between the energy source or load on the first input channel and the output channel;
   cause power to flow between the energy source or load on both the first and second input channels and the output channel; or
   disconnect the energy source or load on both of the first and second input channels from the output channel.
16. The three port DC-DC converter of any preceding clause, wherein each of the first switching device, the second switching device, and the third switching device comprises one of:
   a half phase module including a switch and a diode that form a switch/diode pair that provide for bidirectional current flow; or
   a diode allowing current flow in only one direction.
17. A multi-energy source system comprising:
   a direct current (DC) link;
   a load coupled to the DC link and configured to receive energy from the DC link;
   a three port DC/DC converter comprising an output channel coupled to the DC link and comprising first and second input channels;
   a first energy source coupled to the first input channel of the three port DC/DC converter; and
   a second energy source coupled to the second input channel of the three port DC/DC converter;
   wherein the three port DC/DC converter further comprises:
      an arrangement of switching devices consisting of a first switching device, a second switching device, and a third switching device; and
      a controller in operable communication with the arrangement of switching devices to selectively operate each of the first switching device, the second switching device, and the third switching device in one of an On state and an Off state;
      wherein the controller is programmed to selectively operate each of the first switching device, the second switching device, and the third switching device in one of the On state and the Off state so as to control current flow between the first and second energy sources and the output channel.
18. The multi-energy source system of any preceding clause, wherein, in controlling current flow between the first and second energy sources and the output channel, the controller is further programmed to operate the first switching device and the third switching device in the On state to cause power to flow between the first energy source and the output channel.
19. The multi-energy source system of any preceding clause, wherein, in controlling current flow between the first and second energy sources and the output channel, the controller is further programmed to operate the first switching device and the second switching device in the On state to cause power to flow between both of the first and second energy sourcesand the output channel.
20. The multi-energy source system of any preceding clause, wherein, in controlling current flow between the first and second energy sources and the output channel, the controller is further programmed to operate the second switching device and the third switching device in the On state to disconnect both of the first and second energy sources from the output channel.

## Claims

1. A three port DC-DC converter (10) comprising:
an arrangement of switching devices consisting of a first switching device (58), a second switching device (60), and a third switching device (62);
a pair of input channels (38,46) that provide current to the arrangement of switching devices, with the pair of input channels connected to and receiving or sending power from or to a plurality of energy sources or loads; and
an output channel (54) that outputs a controlled power from or to the three port DC-DC converter;
wherein the first switching device (58), the second switching device (60), and the third switching device (60) are selectively controllable to provide a controlled power to the output channel from the plurality of energy sources or loads connected to the input channels.

2. The three port DC-DC converter of claim 1, wherein each of the pair of input channels includes an inductor (36,44) thereon.

3. The three port DC-DC converter of claim 1 or claim 2, further comprising a controller in operable communication with the arrangement of switching devices to selectively operate each of the first switching device, the second switching device, and the third switching device in one of a conducted state and a non-conducted state.

4. The three port DC-DC converter of any preceding claim, wherein the plurality of energy sources or loads comprises a first energy source and a second energy source, with the first energy source connected to one of the pair of input channels and the second energy source connected to the other of the pair of input channels.

5. The three port DC-DC converter of claim 4, wherein a voltage of the first energy source is lower than a voltage of the second energy source.

6. The three port DC-DC converter of claim 4 or claim 5, wherein the controller is programmed to operate the first switching device and the third switching device in the conducted state to cause power to flow between the first energy source and the output channel.

7. The three port DC-DC converter of any of claims 4 to 6, wherein the controller is programmed to operate the first switching device and the second switching device in the conducted state to cause power to flow between both of the first and second energy sources and the output channel.

8. The three port DC-DC converter of any of claims 4 to 7, wherein the controller is programmed to operate the second switching device and the third switching device in the conducted state to disconnect both of the first and second energy sources from the output channel.

9. The three port DC-DC converter of any preceding claim, wherein the selective operation of each of the first switching device, the second switching device, and the third switching device by the controller provides a shared current path between the plurality of energy sources or loads and the output channel.

10. The three port DC-DC converter of any preceding claim, wherein each of the first switching device, the second switching device, and the third switching device comprises a half phase module including a switch and a diode that form a switch/diode pair, such that the three port DC-DC converter is a bidirectional buck-boost converter.

11. The three port DC-DC converter of any preceding claim, wherein two switching devices of the arrangement of switching devices comprise a half phase module including a switch and a diode that form a switch/diode pair, and the other of the arrangement of switching devices comprises a diode to control current flow in one direction, such that the three port DC-DC converter is one of a boost converter or a buck converter.

12. The three port DC-DC converter of any preceding claim, wherein the plurality of energy sources or loads comprises either:
energy sources provided on either a low voltage side or a high voltage side of the three port DC-DC converter, such that the three port DC-DC converter delivers power from the energy sources to the loads in a generative mode; or
loads provided on either a low voltage side or a high voltage side of the three port DC-DC converter, such that the three port DC-DC converter delivers power provided by the loads to the energy sources when operating in a regenerative mode.

13. A three port DC-DC converter comprising:
a first voltage conversion circuit including:
an inductor;
a pair of switching devices coupled to the inductor;
a second voltage conversion circuit including:
an inductor;
a pair of switching devices coupled to the inductor; and
a first input channel and a second input channel connected to the first and second voltage conversion circuits, respectively, with each of the input channels providing power to its respective voltage conversion circuit from one or more energy sources or loads connected thereto;
wherein the pair of switching devices in the first voltage conversion circuit and the pair of switching devices in the second switching device are formed from an arrangement of a first switching device, a second switching device and a third switching device, with the first and second voltage conversion circuits having a shared current path between to an output channel of the three port DC-DC converter.

14. The three port DC-DC converter of claim 13 further comprising a controller in operable communication with the first and second voltage conversion circuits to selectively operate each of the first switching device, the second switching device, and the third switching device in one of an On state and an Off state.

15. A multi-energy source system comprising:
a direct current (DC) link;
a load coupled to the DC link and configured to receive energy from the DC link;
a three port DC/DC converter comprising an output channel coupled to the DC link and comprising first and second input channels;
a first energy source coupled to the first input channel of the three port DC/DC converter; and
a second energy source coupled to the second input channel of the three port DC/DC converter;
wherein the three port DC/DC converter further comprises:
an arrangement of switching devices consisting of a first switching device, a second switching device, and a third switching device; and
a controller in operable communication with the arrangement of switching devices to selectively operate each of the first switching device, the second switching device, and the third switching device in one of an On state and an Off state;
wherein the controller is programmed to selectively operate each of the first switching device, the second switching device, and the third switching device in one of the On state and the Off state so as to control current flow between the first and second energy sources and the output channel.
